# EUROPEAN PATENT APPLICATION

(11) **EP 2 723 136 A1**
(43) Date of publication of application: **23.04.2014**
(21) Application number: 12814168.6
(22) Date of filing: 26.06.2012
(51) Int. Cl.: H04W 74/08

(54) **SERVICE DATA TRANSMISSION METHOD AND SYSTEM**

(30) Priority: 15.07.2011 CN 201110198453
(71) Applicant: ZTE Corporation, Shenzhen, Guangdong 518057 (CN)
(72) Inventor: LV, Kaiying, Shenzhen Guangdong 518057 (CN); SUN, Bo, Shenzhen Guangdong 518057 (CN); LI, Nan, Shenzhen Guangdong 518057 (CN); JIANG, Jing, Shenzhen Guangdong 518057 (CN); HAN, Zhiqiang, Shenzhen Guangdong 518057 (CN); XING, Weimin, Shenzhen Guangdong 518057 (CN)
(74) Representative: Ahner, Philippe
(86) International application number: PCT/CN2012/077553
(87) International publication number: WO 2013/010430

(57) **Abstract**

A data transmission method and system are disclosed. The method comprises: a sending station sends a radio frame and notifies group transmission time interval information; a group station receives the radio frame and acquires group transmission time interval information of a group to which the group station belongs; and the group station competes for a sending opportunity within the group transmission time interval of the group to which the group station belongs. In accordance with the scheme provided in embodiments of the disclosure, a sending station allocates specific group transmission time intervals (subsections) to stations of different groups, and in the case of a large number of users stations, user stations in different groups compete for channels within different time intervals, thereby avoiding the simultaneous or approximately simultaneous competition among a large number of users, reducing the probability of collisions and improving the utilization efficiency of wireless resources.

## Description

### TECHNICAL FIELD

The disclosure relates to the field of wireless communications, and in particular to a data transmission method and system.

### BACKGROUND

At present, in the wireless network field, the rapid development of a Wireless Local Area Network (WLAN) gives rise to an increasing demand for the application of the WLAN. In an Institute of Electrical and Electronic Engineers (IEEE) 802.11 standard, a series of WLAN technologies in accordance with the most prevalent standards (such as 802.11a, 802.11b and 802.11g) have been defined one after another, and other task groups emerge successively later which are committed to developing improved standards involving the existing 802.11 technology, for example, a 802.11ah task group is mainly used aiming at resources in license-free frequency bands below 1GHz to support new network applications such as load sharing of a smart grid, a sensor network or a cellular network.

In the IEEE 802.11 standard, one Access Point (AP) and a plurality of Stations (STA) associated with the AP form a Basic Service Set (BSS). Two operation modes, that is, a Distributed Coordination Function (DCF) and a Point Coordination Function (PCF), and improvements thereof, that is, an Enhanced Distributed Channel Access (EDCA) function and a Hybrid Coordination Function Controlled Channel Access (HCCA) function, are defined in the IEEE 802.11 standard. The DCF, the basic operation mode, uses a Carrier Sense Multiple Access with Collision Avoidance (CSMA/CA) mechanism to enable a plurality of stations to share a wireless channel; the EDCA function, an enhanced operation mode the same as the DCF in basic process, uses the CSMA/CA mechanism to enable the sharing of a wireless channel among a plurality of queues having different priorities and reserve a Transmission Opportunity (TXOP); in the HCCA operation mode, in a Controlled Access Phase (CAP), an AP waits a period of time shorter than the process of the EDCA to obtain a right of control, polls using a Contention-Free Poll (CF-PoII) frame and endows a polled STA with a TXOP; the STA may send a TXOP Request at a polled TXOP or at an EDCA TXOP so as to request more TXOPs.

In the related art, the EDCA function is usually used which is capable of providing a certain quality of service as well as guaranteeing the maximum fairness. The HCCA mechanism, by contrast, is limited in application, and especially in the case of overlapping BSS (OBSS), the HCCA mechanism is frequently subjected to collisions due to the channel competition among the BSSs.

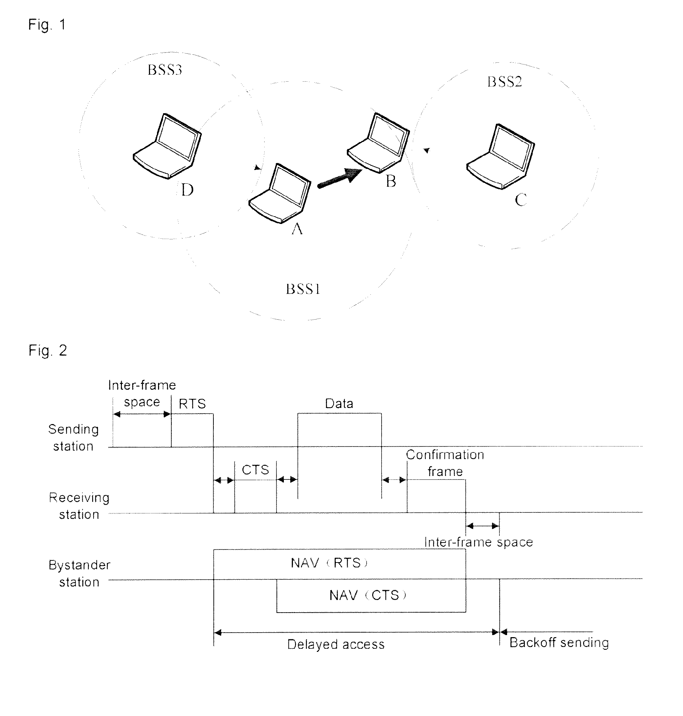

It becomes extremely difficult to detect the conflict between wireless environments when a channel is shared by a plurality of wireless stations, one of the major problems contributing to the difficulty lies in hidden stations; as shown in Fig. 1, a station A sends data to a station B while a station C sends data to a station B, as the stations C and A are within the coverage range of each other, the simultaneous data transmission of the stations A and C will cause a conflict. In the view of the station A, the station C is a hidden station. To solve the problem of hidden stations, a virtual channel detection mechanism is proposed in the IEEE 802.11 standard to contain reserved channel time information, that is, a duration/user ID field domain (Duration/ID), in a head of a radio frame, other bystander stations receiving the radio frame which contains the reserved time information set a locally stored Network Allocation Vector (NAV) the value of which is equal to the maximum value of the reserved time within which the bystander stations send no data so as to avoid collisions by avoiding the channel competition among hidden stations. Other stations send no data until the value of the NAV is reduced to 0. For example, a sending part sends a Request to Send (RTS) frame containing channel reservation time information to reserve a channel, a receiving part responds with a Clear to Send (CTS) frame to confirm the reserved channel, wherein the CTS frame also contains the channel appointment time information to guarantee the frame exchange of the sending part. The use of the NAV is schematically shown in Fig. 2.

In new WLAN application scenarios defined by the IEEE 802.11ah task group, a majority of users are required to attempt to transmit data simultaneously or almost simultaneously in many cases, for example, in typical cases of meter reading, remote control and measurement, public security and medical monitoring. It is required in some scenarios that at most 6000 stations are supported under one BSS, and secondly, different stations may be applied to one ore more different service types, such as smart water meter, ammeter or gas meter and different stations may be operated and managed by different manufacturers or service providers. Generally, a system needs to report data periodically or unperiodically according to service type, service provider or the combination thereof, thus making a large number of stations attempt to transmit data simultaneously or almost simultaneously. In this case, the WLAN mechanism, which is a wireless channel sharing mechanism based mainly on competition, causes a great many of collisions, which reduces the efficiency of the system.

### SUMMARY

In view of this, the main purpose of embodiments of the disclosure is to provide a data transmission method and system, which are capable of reducing the probability of collisions in the case of a great many of services and therefore avoiding unnecessary transmission delay and consequentially improving system efficiency.

In order to address the technical problem above, the technical scheme of the embodiments described herein is realized as follows:

A data transmission method includes the following steps: sending, by a sending station, a radio frame and notifying group transmission time interval information; receiving, by a group station, the radio frame and acquiring group transmission time interval information of a group to which the group station belongs; and
competing, by the group station, for a sending opportunity within a group transmission time interval of the group to which the group station belongs.
The sending a radio frame and notifying group transmission time interval information by the sending station may include: sending, by the sending station, the radio frame to the group station to notify the group station of the group transmission time interval information.

The group transmission time interval information may be included in the radio frame; and
group identification information may also be included in the radio frame.

The sending a radio frame and notifying group transmission time interval information by the sending station may include: adding, by the sending station, group transmission time interval information of one or more groups and/or group information into the periodically sent radio frame.

The competing for a sending opportunity within the group transmission time interval of the group to which the group station belongs by the group station may include: competing, by the group station, for a sending opportunity using a Carrier Sense Multiple Access with Collision Avoidance (CSMA-CA) mechanism within the group transmission time interval of the group to which the group station belongs.

The competing for a sending opportunity within the group transmission time interval of the group to which the group station belongs by the group station may include: transmitting, by a station of the group stations getting the sending opportunity within the group transmission time interval of the group to which the group station belongs, a radio frame within a specific duration.

The data transmission method may further include: competing, by the group station, to send the radio frame within the group transmission time interval of the group to which the group station belongs so as to request the sending station to allocate a new group transmission time interval.

After receiving the radio frame, setting, by other stations except the group stations of the group and the sending station, Network Allocation Vectors (NAVs) thereof according to the group transmission time interval contained in the radio frame.

The data transmission method may further include: within the group transmission time interval, ending, by the sending station, the allocated group transmission time interval ahead of time and notifying all stations to set NAVs thereof to be 0.

The data transmission method may further include: sending, by the sending station, a radio frame to group stations of another group after the group transmission time interval and notifying group transmission time interval information of the another group.

The group transmission time interval information may be included in the radio frame;
a traffic indication mapping graph may also be included in the radio frame; and
in the traffic indication mapping graph, each bit may correspond to a group or each bit may correspond to a station and multiple successive bits may correspond to a group.

A data transmission system at least includes a sending station and one or more group stations, each group station including one or more stations, wherein
the sending station is configured to send a radio frame and to notify group transmission time interval information;
the group station is configured to receive the radio frame, to acquire group transmission time interval information of a group to which the group station belongs, and to compete for a sending opportunity within the group transmission time interval of the group to which the group station belongs, wherein a station of the group stations getting the sending opportunity sends the radio frame at the gotten sending opportunity.

The sending station may further be configured to end the allocated group transmission time interval ahead of time within the group transmission time interval; and correspondingly; the group station may further be configured to set a Network Allocation Vector (NAV) thereof to be 0.

The station of the group stations getting the sending opportunity may further be configured to request, at the gotten sending opportunity, the sending station to allocate more transmission opportunities.

Within the group transmission time interval, the stations of the group stations getting no sending opportunity may be configured to keep carrier sense to compete for a next sending opportunity.

The sending station may be configured to send a radio frame to group stations of another group after the group transmission time interval and to notify group transmission time interval information of the another group.

The group transmission time interval information may be included in the radio frame;
a traffic indication mapping graph may also be included in the radio frame; and
in the traffic indication mapping graph, each bit may correspond to a group or each bit may correspond to a station and multiple successive bits may correspond to a group.

It can be seen from the technical scheme provided in embodiments of the disclosure that a sending station is included to send a radio frame, a group transmission time interval is allocated to a group station, and the group station competes for a sending opportunity within the allocated group transmission time interval. In accordance with the scheme provided in embodiments of the disclosure, a sending station allocates specific group transmission time intervals (subsections) to stations of different groups to enable user stations in different groups to compete for channels within different time intervals in the case of a great many of users stations, thus avoiding the simultaneous or approximately simultaneous competition among a majority of users, reducing the probability of collisions and improving the utilization efficiency of wireless resources.

### BRIEF DESCRIPTION OF THE DRAWINGS

Fig. 1 is a schematic diagram illustrating existing hidden stations;
Fig. 2 is a schematic diagram illustrating the use of existing NAVs;
Fig. 3 is a flowchart of a data transmission method according to embodiments of the disclosure;
Fig. 4 is a schematic diagram illustrating a first embodiment of a data transmission method provided in embodiments of the disclosure;
Fig. 5 is a schematic diagram illustrating a second embodiment of a data transmission method provided in embodiments of the disclosure;
Fig. 6 is a schematic diagram illustrating a third embodiment of a data transmission method provided in embodiments of the disclosure; and
Fig. 7 is a schematic diagram illustrating a fourth embodiment of a data transmission method provided in embodiments of the disclosure.

### DETAILED DESCRIPTION

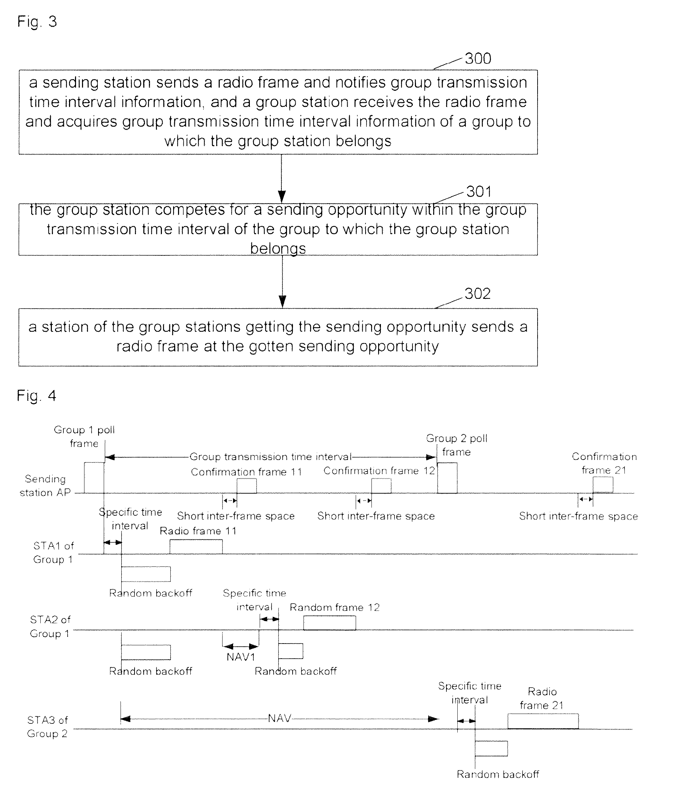

Fig. 3 is a flowchart of a data transmission method according to embodiments of the disclosure, and as shown in Fig. 3, the data transmission method includes the following steps:
Step 300: a sending station sends a radio frame and notifies group transmission time interval information, and a group station receives the radio frame and acquires group transmission time interval information of a group to which the group station belongs.

In this step, the radio frame sent from the sending station to the group station includes the group transmission time interval information, and further includes group identification information for identifying different groups. There is one or more group stations.

Further, after receiving the radio frame, other stations except group stations of the group and the sending station set NAVs thereof according to a group transmission time interval contained in the radio frame.

In this step, the sending station may further send the radio frame through regular broadcast to notify the group transmission time interval/intervals of one or more groups. The sending station may allocate the same or different group transmission time intervals to group stations in different groups.

It should be noted that the sending station may end the allocated group transmission time interval ahead of time within the group transmission time interval, and at this time, the NAVs of all stations are set to be 0.

Step 301: the group station competes for a sending opportunity within the group transmission time interval of the group to which the group station belongs.

In this step, the group station, after receiving a radio frame matched with (accordant with) the group identification information of the group to which the group station belongs or the broadcasted radio frame, competes for a sending opportunity using a CSMA-CA mechanism within the allocated group transmission time interval. The way of the competition, which can be understood by reference to the related art and is not intended to limit the protection scope of the disclosure, is not described here repeatedly.

Further, the group station competes to send the radio frame within the allocated group transmission time interval so as to request the sending station to allocate more new group transmission time intervals.

Step 302: a station of the group stations getting the sending opportunity sends a radio frame at the gotten sending opportunity. Specifically, a station of the group stations getting the sending opportunity within the allocated group transmission time interval transmits the radio frame within a specific duration, that is, at the gotten sending opportunity.

In accordance with the method provided in the embodiments of the disclosure, the sending station allocates group transmission time intervals to stations in different groups to enable user stations in different groups to compete for channels within different time intervals in the case of a great many of users stations, thus avoiding the simultaneous or approximately simultaneous competition among a large number of users, reducing the probability of collisions and improving the utilization efficiency of wireless resources.

Further, within the group transmission time interval, the stations of the group stations not getting a sending opportunity keep carrier sense to compete for a next sending opportunity.

Further, the sending station sends a radio frame to group stations of another group after the group transmission time interval and notifies group transmission time interval information of the another group.

The method provided herein is described below in detail with reference to specific embodiments.

First specific embodiment: when a user station accesses a network or is subjected to association authentication, an AP groups access stations according to an MAC address of a user, service type identification information, a manufacturer identification number or an operator identification number and allocates group identifiers. In this embodiment, it is assumed that a group 1 includes a station 1 (STA1) and a station 2 (STA2), and a group 2 includes a station 3 (STA3).

As shown in Fig. 4, a sending station AP sends a multicast or broadcast radio frame, that is, a group 1 poll frame, to the stations of group 1. A group identifier and duration for indicating the allocation of a group transmission time interval are included in the sent group 1 poll frame, wherein the duration refers to the information indicated by the Duration/ID field domain of an MAC frame head; the station of the group 1, after receiving a radio frame matched with the group identification information of the group 1, competes for a sending opportunity according to a CSMA/CA and random backoff mechanism within the allocated group transmission time interval indicated by the duration, that is, after determining, using a physical and virtual carrier sending (CS) mechanism, that a channel is idle within a specific inter-frame space and that the count of a random backoff window is reduced to 0, the station of the group 1 gets a sending opportunity and then send a radio frame 11.

The duration is included in the radio frame 11 to reserve a transmission time interval; after receiving the radio frame 11 correctly, the AP sends the confirmation radio frame 11 to the STA1; the STA1 and the AP exchange one or more radio frames using a short inter-frame space within the reserved transmission time interval; the station STA2 of the group 1 sets the NAV thereof to be NAV1 according to the reserved transmission time interval, that is, the station 2 considers that the channel is busy within the transmission time interval and does not compete for a sending opportunity.

After the frame exchange transmission time interval reserved by the STA1 from the AP but prior to the end of the allocated group transmission time interval, the other stations of the group start to continue to compete for a sending opportunity. The stations of the group may compete for a sending opportunity using a CSMA/CA mechanism according to the same or different access categories, and so forth.

The other stations except stations of the group and the sending station, for example, the STA3 of the group 2, sets the NAV thereof according to the group transmission time interval after receiving the radio frame, that is, the STA3 considers that the channel is busy within the group transmission time interval and does not compete for a sending opportunity or starts to sleep.

After the allocated group transmission time interval, the AP sends a radio frame to another group and allocates a new group transmission time interval to the group, and so forth.

Second specific embodiment 2: the process of the allocation of group transmission time intervals to groups by an AP and the competition for a sending opportunity among stations within the group transmission time interval in the embodiment 2 is identical to that described in the specific embodiment 1, therefore, this process is not described here repeatedly. In this embodiment, it is assumed that a group 1 includes a station 1 (STA1), a station 2 (STA2) and a station (STA3).

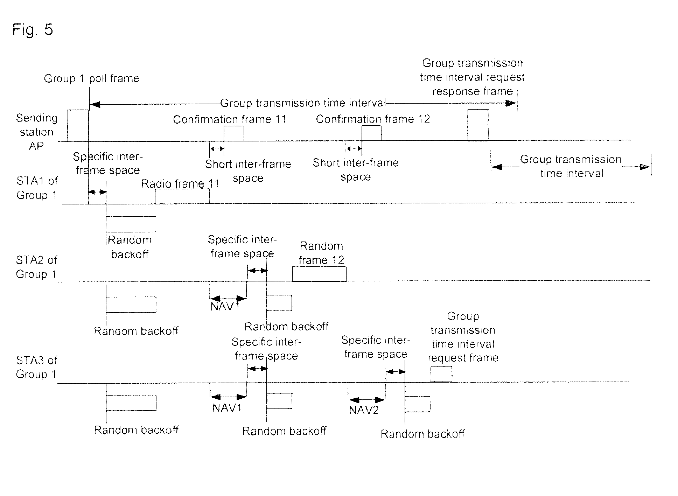

In this embodiment, as shown in Fig. 5, before the currently allocated group transmission time interval is ended, the station STA3 of the group getting a sending opportunity sends a radio frame such as a group transmission time interval request frame to the sending station to request the AP to continue to allocate a new group transmission time interval to the group 1, wherein the group transmission time interval request frame may include the requested group identification information and/or group transmission time interval information; after receiving the request frame, the AP sends a group transmission time interval request response radio frame to the group 1 to allocate a new group transmission time interval, and so forth.

Specific embodiment 3: the process of the allocation of group transmission time intervals to groups by an AP and the competition for a sending opportunity among stations within the group transmission time interval in the embodiment 2 is identical to that described in the specific embodiment 1, therefore, this process is not described here repeatedly. In this embodiment, it is assumed that a group 1 includes a station 1 (STA1), a station 2 (STA2) and a station 3 (STA3), and a group 2 includes a station 4 (STA4).

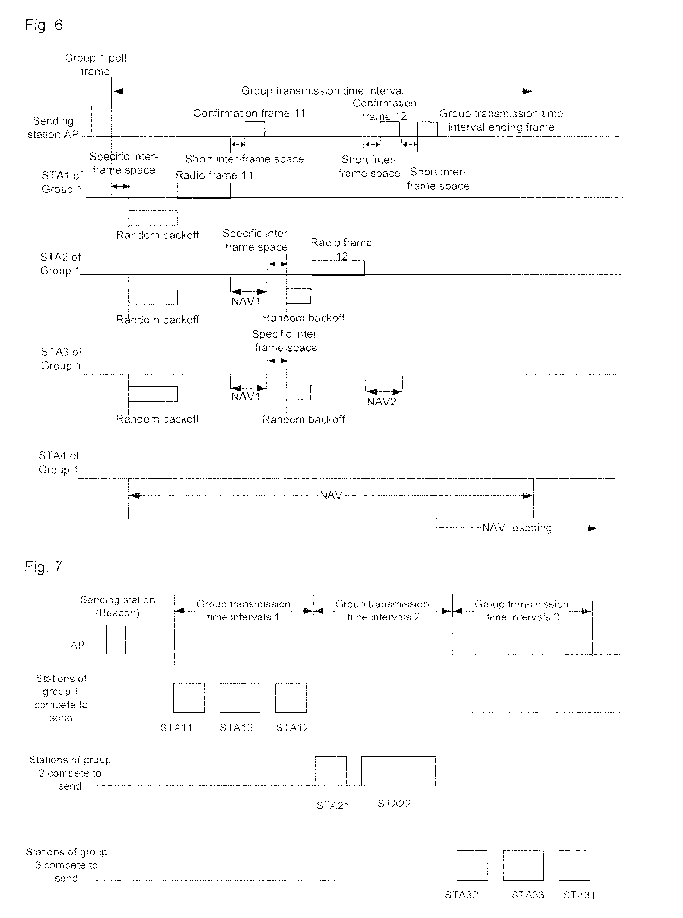

In this embodiment, as shown in Fig. 6, an AP may end the currently allocated group transmission time interval ahead of time before the currently allocated group transmission time interval is ended. For example, after determining to transmit data on a channel within a period of time or to send data immediately or for any sake, the AP ends the currently allocated group transmission time interval ahead of time, specifically, this process includes: the AP sends a group transmission time interval ending radio frame, for example, a CF-END, to notify all stations to end the current group transmission time interval. The other stations except the group of stations obtaining the allocated group transmission time interval set NAVs thereof to be 0 after receiving the radio frame for ending the currently allocated group transmission time interval ahead of time, that is, the other stations consider that the current channel is detected by virtual carriers to be idle.

All stations start to compete for a channel after the group transmission time interval is ended ahead of time. The AP may compete for a channel to send radio frames to other groups to allocate new group transmission time intervals to the other groups or to send downlink data thereof. The other stations may also compete for a channel to send a radio frame.

Fourth specific embodiment: an AP periodically sends a broadcast message, for example, a system message (Beacon management radio frame) to allocate specific group transmission time sections, for example, group transmission time intervals 1, 2 and 3, to groups 1, 2 and 3. Stations of the groups 1, 2 and 3 compete for a sending opportunity within the group transmission time intervals allocated thereto. The group transmission time interval of each group which may be repeated periodically is configured by a system message broadcast.

In this embodiment, as shown in Fig. 7, stations STA11, 12 and 13 of the group 1 compete for a sending opportunity within the group transmission time interval 1. Stations STA21 and STA22 of the group 2 compete for a sending opportunity within the group transmission time interval 2. Stations STA31, STA32 and STA33 of the group 3 compete for a sending opportunity within the group transmission time interval 3, and so forth.

Fifth specific embodiment 5: an AP periodically sends a broadcast or multicast message, such as a Beacon management radio frame in which a group transmission time interval is included; each bit in the traffic indication mapping graph in the frame corresponds to a group which corresponds to a station, a corresponding bit '1' indicating the allocation of a group transmission time interval to the group (station). For example, the traffic indication mapping graph is '10010100', the first bit indicates a station 1 while the following bits successively indicate stations 2-8, wherein stations 1, 4 and 6 corresponding to bit '1' indicate the allocation of group transmission time intervals to stations 1, 4 and 6. Stations 1, 4 and 6 compete for a sending opportunity within corresponding group transmission time intervals thereof.

Specific embodiment 6: an AP periodically sends a broadcast or multicast message, such as a Beacon management radio frame including a group transmission time interval; each bit in the traffic indication mapping graph included in the frame corresponds to a station, multiple successive bits correspond to a group, and the existence of at least one bit '1' in all the bits corresponding to the group indicates the allocation of a group transmission time interval to the group. For example, the traffic indication mapping graph is '0111000010010000', the first bit indicates a station 1 while the following bits successively indicate stations 2-16; starting from the first bit, each four successive bits represents a group, and there are totally four groups. The bits corresponding to stations 2, 3 and 4 in the first group are '1', indicating the allocation of a group transmission time interval to stations 2, 3 and 4 in the group 1. The bits corresponding to all the stations in the second group are all '0', indicating no allocation of a group transmission time interval to stations of the group 2. Similarly, the bits corresponding to groups 3 and 4 are not all '0', indicating the allocation of a corresponding group transmission time interval to the groups 3 and 4. Stations compete for a sending opportunity within corresponding group transmission time intervals thereof.

Aiming at the method provided in the embodiments of the disclosure, a data transmission system is also provide, which at least includes a sending station and one or more group stations, each group station including one or more stations, wherein
the sending station is configured to send a radio frame and to notify group transmission time interval information;
the group station is configured to receive the radio frame, to acquire group transmission time interval information of a group to which the group station belongs, and to compete for a sending opportunity within the group transmission time interval of the group to which the group station belongs, wherein a station of the group stations getting the sending opportunity sends the radio frame at the gotten sending opportunity.

The sending station is further configured to end the allocated group transmission time interval ahead of time within the group transmission time interval, and correspondingly, the group station is also configured to set an NAV thereof to be 0.

The station of the group stations getting the sending opportunity is further configured to request, at the gotten sending opportunity, the sending station to allocate more transmission opportunities.

Within the group transmission time interval, the stations of the group stations not getting a sending opportunity is configured to keep carrier sense to compete for a next sending opportunity.

The sending station is configured to send a radio frame to group stations of another group after the group transmission time interval and to notify group transmission time interval information of the another group.

The mentioned above is merely preferred embodiments of the disclosure but is not to be construed as limiting the protection scope of the disclosure, various modification and variations can be devised by those skilled in this art, and it should be understood that all the modifications, equivalents and improvements devised without departing from the spirit and scope of the disclosure fall within the protection scope of the disclosure.

## Claims

1. A data transmission method, comprising:
sending, by a sending station, a radio frame and notifying group transmission time interval information; receiving, by a group station, the radio frame and acquiring group transmission time interval information of a group to which the group station belongs; and
competing, by the group station, for a sending opportunity within a group transmission time interval of the group to which the group station belongs.

2. The data transmission method according to claim 1, wherein the sending a radio frame and notifying group transmission time interval information by the sending station comprises:
sending, by the sending station, the radio frame to the group station to notify the group station of the group transmission time interval information.

3. The data transmission method according to claim 1, wherein:
the group transmission time interval information is included in the radio frame; and
group identification information is also included in the radio frame.

4. The data transmission method according to claim 1, wherein the sending a radio frame and notifying group transmission time interval information by the sending station comprises:
adding, by the sending station, group transmission time interval information of one or more groups and/or group information into the periodically sent radio frame.

5. The data transmission method according to claim 1, 2, 3 or 4, wherein the competing for a sending opportunity within the group transmission time interval of the group to which the group station belongs by the group station comprises: competing, by the group station, for a sending opportunity using a Carrier Sense Multiple Access with Collision Avoidance (CSMA-CA) mechanism within the group transmission time interval of the group to which the group station belongs.

6. The data transmission method according to claim 1, wherein the competing for a sending opportunity within the group transmission time interval of the group to which the group station belongs by the group station comprises: transmitting, by a station of the group stations getting the sending opportunity within the group transmission time interval of the group to which the group station belongs, a radio frame within a specific duration.

7. The data transmission method according to claim 1, further comprising: competing, by the group station, to send the radio frame within the group transmission time interval of the group to which the group station belongs so as to request the sending station to allocate a new group transmission time interval.

8. The data transmission method according to claim 2, wherein after receiving the radio frame, setting, by other stations except the group stations of the group and the sending station, Network Allocation Vectors (NAVs) thereof according to the group transmission time interval contained in the radio frame.

9. The data transmission method according to claim 1, further comprising: within the group transmission time interval, ending, by the sending station, the allocated group transmission time interval ahead of time and notifying all stations to set NAVs thereof to be 0.

10. The data transmission method according to claim 1, further comprising: sending, by the sending station, a radio frame to group stations of another group after the group transmission time interval and notifying group transmission time interval information of the another group.

11. The data transmission method according to claim 1, wherein:
the group transmission time interval information is included in the radio frame;
a traffic indication mapping graph is also included in the radio frame; and
in the traffic indication mapping graph, each bit corresponds to a group or each bit corresponds to a station and multiple successive bits correspond to a group.

12. A data transmission system, at least comprising a sending station and one or more group stations, each group station including one or more stations, wherein
the sending station is configured to send a radio frame and to notify group transmission time interval information;
the group station is configured to receive the radio frame, to acquire group transmission time interval information of a group to which the group station belongs, and to compete for a sending opportunity within the group transmission time interval of the group to which the group station belongs, wherein a station of the group stations getting the sending opportunity sends the radio frame at the gotten sending opportunity.

13. The data transmission system according to claim 12, wherein
the sending station is further configured to end the allocated group transmission time interval ahead of time within the group transmission time interval; and correspondingly,
the group station is further configured to set a Network Allocation Vector (NAV) thereof to be 0.

14. The data transmission system according to claim 12 or 13, wherein the station of the group stations getting the sending opportunity is further configured to request, at the gotten sending opportunity, the sending station to allocate more transmission opportunities.

15. The data transmission system according to claim 14, wherein within the group transmission time interval, the stations of the group stations getting no sending opportunity are configured to keep carrier sense to compete for a next sending opportunity.

16. The data transmission system according to claim 12, wherein the sending station is configured to send a radio frame to group stations of another group after the group transmission time interval and to notify group transmission time interval information of the another group.

17. The data transmission system according to claim 12, wherein
the group transmission time interval information is included in the radio frame;
a traffic indication mapping graph is also included in the radio frame; and
in the traffic indication mapping graph, each bit corresponds to a group or each bit corresponds to a station and multiple successive bits correspond to a group.
